Europäisches Patentamt

European Patent Office

Office européen des brevets

(19)

(11) Veröffentlichungsnummer: **0 069 839**
**B1**

# (12) EUROPÄISCHE PATENTSCHRIFT

(45) Veröffentlichungstag der Patentschrift:
01.08.84

(21) Anmeldenummer: 82103919.5

(22) Anmeldetag: 06.05.82

(51) Int. Cl.³: **C 09 D 7/06**, C 09 D 7/12,
C 09 D 5/02

(54) Verwendung von Hydroxyestergemischen als Verfilmungshilfsmittel für filmbildende, wässrige Kunststoffdispersionen.

(30) Priorität: 10.07.81 DE 3127277

(43) Veröffentlichungstag der Anmeldung:
19.01.83 Patentblatt 83/3

(45) Bekanntmachung des Hinweises auf die Patenterteilung:
01.08.84 Patentblatt 84/31

(84) Benannte Vertragsstaaten:
AT BE CH DE FR IT LI NL SE

(56) Entgegenhaltungen:
EP - A - 0 026 982
DE - A - 2 627 320

(73) Patentinhaber: CHEMISCHE WERKE HÜLS AG, - RSP Patente / PB 15 - Postfach 13 20, D-4370 Marl 1 (DE)

(72) Erfinder: Kaufhold, Manfred, Dr., Jasminweg 20, D-4370 Marl (DE)
Erfinder: Tetzner, Heinz, Max-Liebermann-Strasse 2, D-4370 Marl (DE)
Erfinder: Bieleman, Johan, Potterstraat 6, NL-7471 XJ Goor (NL)

## Beschreibung

Der Anmeldungsgegenstand betrifft Verfilmungshilfsmittel für filmbildende, wässerige Kunststoffdispersionen zur Herstellung von Anstrichmitteln (Dispersionsfarben), Überzugsmitteln für den Korrosionsschutz, Klebstoffen und dergleichen.

Verfilmungshilfsmittel bewirken eine Herabsetzung der minimalen Filmbildungstemperatur (MFT) der Dispersionen. Sie bewirken dadurch zugleich eine Verbesserung des Pigmentbindevermögens der Dispersionen im Falle von Anstrichmitteln bzw. eine Verbesserung der Scheuerbeständigkeit der damit hergestellten Anstriche sowie eine Verbesserung des Bindevermögens der Dispersionen im Falle von Klebstoffen.

Als Verfilmungshilfsmittel sind verschiedene flüssige Stoffe bekanntgeworden, wie beispielsweise Ethylenglykolmonobutyletheracetat, Diethylenglykolmonoethylether, 3-Hydroxy-2,2,4-trimethylpentylisobutyrat (HTPB) und Hydroxyestergemische, die durch Umsetzung von 1,2-Epoxyalkanen mit 6 bis 12 C-Atomen und aliphatischen Alkoholen mit 1 bis 4 C-Atomen erhalten werden.

HTPB gilt gemäss DE-PS Nr. 1291041 als ein gutes Verfilmungshilfsmittel, welches die vorgenannten Verfilmungshilfsmittel des Standes der Technik in seinen anwendungstechnischen Eigenschaften übertrifft.

Nachteilig ist, das HTPB einen unangenehmen und intensiven Eigengeruch hat. Das führt dazu, dass bei seiner Herstellung und Verwendung, insbesondere bei Anstrichen von Wohnräumen, eine starke Geruchsbelästigung auftritt.

Ausserdem ist die Herstellung von HTPB ziemlich aufwendig.

So erfordert die Herstellung gemäss der US-PS Nr. 3031632 den vollständigen Ausschluss von Feuchtigkeit, den Einsatz von säurefreiem, d.h. sorgfältig gereinigtem Isobutyraldehyd sowie den Einsatz eines Alkalimetallalkoxids, d.h. eines kostspieligen Katalysators.

Die US-PS Nr. 3291821 beschreibt ein Verfahren zur Herstellung von HTPB, bei welchem wässerige Natronlauge als Katalysator eingesetzt wird. Der Verbrauch an Natronlauge ist ziemlich hoch. Ihr Wiedereinsatz für das Herstellungsverfahren kommt nicht in Betracht, da sich dadurch die Selektivität des Verfahrens drastisch verschlechtern würde. Bei der Aufarbeitung der Reaktionsmischung fällt eine vergleichsweise grosse Menge an Natriumisobutyrat enthaltendem Abwasser an. Dieses belastet die Umwelt oder erfodet aufwendige Massnahmen zur Entsorgung.

Die oben genannten hydroxyestergemische gelten gemäss DE-OS Nr. 2627320 als gute Verfilmungshilfsmittel. Sie haben jedoch bisher keine grössere wirtschaftliche Bedeutung erlangt, da die ihnen zugrunde liegenden 1,2-Epoxyalkane vergleichsweise kostspielig sind.

Es bestand daher ein langjähriges und dringendes Bedürfnis nach einem Verfilmungshilfsmittel, welches die geschilderten Nachteile überwindet.

Die Aufgabe bestand somit darin, ein Verfilmungshilfsmittel bereitzustellen, welches einen angenehmen oder nur geringen Eigengeruch hat, durch ein einfaches Herstellungsverfahren mit vergleichsweise geringem Aufwand erhalten werden kann und ein gutes und abgerundetes Gesamtbild seiner anwendungstechnischen Eigenschaften aufweist.

Die Aufgabe wurde in überraschender Weise durch Bereitstellung von an sich bekannten hydroxyestergemischen, die durch Umsetzung von Propylenoxid mit einer oder mehreren aliphatischen $C_7$- bis $C_{12}$-Monocarbonsäuren erhalten werden können, als Verfilmungshilfsmittel für filmbildende, wässerige Kunststoffdispersionen gelöst. Gegenstand der Anmeldung ist lediglich die Verwendung dieser Gemische als Verfilmungshilfsmittel.

Die Hydroxyestergemische sind Gemische von Monoestern des Propandiol-1,2. Die der Estergruppe zugrunde liegende Hydroxylgruppe ist teils primär und teils sekundär und somit die unveresterte Hydroxylgruppe teils sekundär und teils primär, wobei die Mengenverhältnisse der vorliegenden beiden Arten von Hydroxyestern in den Gemischen schwanken können.

Die den Hydroxyestern zugrunde liegenden Carbonsäuren sind aliphatische $C_7$- bis $C_{12}$-Monocarbonsäuren, vorzugsweise $C_8$- bis $C_{11}$-Monocarbonsäuren.

Die Monocarbonsäuren können geradkettig oder verzweigt sein. Vorzugsweise sind sie verzweigt.

Die erfindungsgemässen Verfilmungshilfsmittel können in vorteilhafter Weise durch Umsetzung von Propylenoxid mit den entsprechenden Carbonsäuren in Gegenwart eines geeigneten Katalysators, wie beispielsweise des Natriumsalzes der anzulagernden Carbonsäure, bei erhöhter Temperatur und unter Druck erhalten werden.

Geeignete verzweigte Carbonsäure zur Herstellung der bevorzugten Verfilmungshilfsmittel sind zugänglich aus Produkten der Oxosynthese, wie beispielsweise 2-Ethylhexansäure, bzw. zugänglich durch die Kochsche Säuresynthese. Diese Koch-Säuren, die beispielsweise unter der Bezeichnung Versatic-Säuren der Fa. Shell handelsüblich wurden, sind zur Herstellung der erfindungsgemässen Verfilmungshilfsmittel besonders bevorzugt.

Die erfindungsgemässen Verfilmungshilfsmittel werden in filmbildenden, wässerigen Kunststoffdispersionen eingesetzt. Als solche kommen beispielsweise Dispersionen von Vinylacetatcopolymeren, Styrol/Butadien-Copolymeren, Styrol/Acrylat-Copolymeren und Reinacrylatharzen in Betracht. Sie eignen sich beispielsweise zur Herstellung von Dispersionsfarben für Innen- und Aussenwände von Gebäuden von Überzugsmitteln für den Korrosionsschutz und von Klebstoffen.

Die Erfindung wird durch die folgenden Beispiele erläutert.

Als Verfilmungshilfsmittel wird ein Hydroxyestergemisch eingesetzt, das durch Umsetzung von Propylenoxid mit $C_{10}$-Versatic-Säure erhalten

wurde: Propandiol-1,2-mono-$C_{10}$-Versatic-Säureester (PVE). Es wird mit dem nicht erfindungsgemässen HTPB verglichen.

Die im folgenden eingesetzten handelsüblichen, wässerigen Kunststoffdispersionen haben einen Festkörpergehalt von ca. 50 Gew.-%.

Prozentangaben sind Gewichtsprozente, falls nicht anders angegeben.

*Eigengeruch der Verfilmungshilfsmittel*

HTPB penetrant
PVE fast geruchslos

*Verträglichkeit der Verfilmungshilfsmittel mit Kunststoffdispersionen*

3 Gew.-Teile des Verfilmungshilfsmittels werden während ca. 1 min unter Rühren zu 100 Gew.-Teilen der Kunststoffdispersion gegeben. Nach eintägiger Lagerung der Proben erfolgt die visuelle Beurteilung der Verträglichkeit unmittelbar anhand der Probe sowie nach dem Auftragen eines Films auf Glasplatten mit einem Filmziehgerät und nach dem Trocknen des Filmes bei 23° C (Filmdikke trocken: 100 µm).

*Tabelle 1*

Verträglichkeit

|  | Vinylacetat-copolymer | Styrol/Acrylat-Copolymer I | Styrol/Acrylat-Copolymer II | Reinacrylat-harz |
|---|---|---|---|---|
| HTPB | fast gut | gut | schlecht | gut |
| PVE | mittel | gut | mittel | gut |

*MFT von Kunststoffdispersionen*

Den Kunststoffdispersionen werden die Verfilmungshilfsmittel in den in Tabelle 2 angegebenen Mengen unter Rühren zugegeben. Nach eintägiger Lagerung bei 23° C wird die MFT nach DIN 53 787 (200 µm Nassfilmdicke) gemessen und mit derjenigen einer Nullprobe verglichen.

*Tabelle 2*

MFT (° C)

| Verfilmunghilfsmittel in der Kunststoffdispersion (%) | 0 | 1 | 2 | 3 | 4 |
|---|---|---|---|---|---|
| Vinylacetatcopolymer | 10 |  |  |  |  |
| HTPB |  | 6 | 2 | 0 | — |
| PVE |  | 6 | 2 | 0 | — |
| Styrol/Acrylat-Copolymer I | 17 |  |  |  |  |
| HTPB |  | 12 | 7 | 1 | 0 |
| PVE |  | 12 | 6 | 0 | — |
| Styrol/Acrylat-Copolymer II | 20,5 |  |  |  |  |
| HTPB |  | 14 | 9 | 4 | 0 |
| PVE |  | 14 | 9 | 5 | 1 |
| Reinacrylatharz | 20,5 |  |  |  |  |
| HTPB |  | 14 | 9 | 3 | 0 |
| PVE |  | 15,5 | 10 | 5 | 2 |

*Lagerstabilität von Dispersionsfarben*

Dispersionsfarben zur Herstellung von Anstrichen auf Innenwänden von Gebäuden werden aus den in Tabelle 3 angegebenen Kunststoffdispersionen mit üblicher Pigmentierung hergestellt (Pigmentvolumenkonzentration: 80%, $\hat{=}$ 20 Vol.-Teile Kunststoff, bezogen auf 100 Vol.-Teile Festkörper der Farbe).

Die Farben enthalten 10% Kunststoffdispersion. Der Gehalt der Farben an Verfilmungshilfsmittel beträgt 1% bzw. in den Vergleichsproben 0%.

Zur Charakterisierung der Lagerstabilität wird die Viskosität nach der in Tabelle 3 angegebenen Lagerung im Viskotester der Fa. Haake bei 23° C gemessen. Vergleichsproben werden sofort nach der Zubereitung der Farbe gemessen.

*Tabelle 3*

Lagerstabilität (Viskositäten, [mPa·s])

| Verfilmungshilfsmittel in der Farbe | (%) | Lagerzeit | | |
|---|---|---|---|---|
|  |  | sofort | 1 Monat 23° C | 2 Wochen 50° C |
| Vinylacetatcopolymer | 0 | 4900 | 4750 | 5300 |
| HTPB | 1 | 4900 | 4600 | 5200 |
| PVE | 1 | 4800 | 4500 | 5200 |

| Verfilmungshilfsmittel in der Farbe | (%) | Lagerzeit | | |
|---|---|---|---|---|
| | | sofort | 1 Monat 23° C | 2 Wochen 50° C |
| Styrol/Acrylat-Copolymer I | 0 | 4800 | 4600 | 5650 |
| HTPB | 1 | 4750 | 4500 | 6500 |
| PVE | 1 | 4750 | 4500 | 6000 |
| Styrol/Acrylat-Copolymer II | 0 | 4900 | 4800 | 4950 |
| HTPB | 1 | 4850 | 4800 | 5550 |
| PVE | 1 | 5100 | 5000 | 5300 |
| Reinacrylatharz | 0 | 4500 | 4450 | 4800 |
| HTPB | 1 | 4650 | 4000 | 4350 |
| PVE | 1 | 4700 | 4000 | 4800 |

*Scheuerbeständigkeit von mit Dispersionsfarben hergestellten Innenanstrichen*

Die Prüfung der Scheuerbeständigkeit von mit den oben beschriebenen Dispersionsfarben bei 23° C hergestellten Anstrichen erfolgt nach DIN 53 778 und zwar nach 7- bzw. 28tägiger Alterung der Anstriche.

*Tabelle 4*

Scheuerbeständigkeit (Scheuercyclen)

| Verfilmungshilfsmittel in der Farbe | (%) | nach 7 d | nach 28 d |
|---|---|---|---|
| Styrol/Acrylat-Copolymer I | 0 | 60 | 205 |
| HTPB | 1 | 640 | 755 |
| PVE | 1 | 595 | 665 |
| Styrol/Acrylat-Copolymer II | 0 | 100 | 195 |
| HTPB | 1 | 680 | 1190 |
| PVE | 1 | 565 | 945 |
| Reinacrylatharz | 0 | 45 | 95 |
| HTPB | 1 | 365 | 375 |
| PVE | 1 | 370 | 350 |

Das erfindungsgemässe Verfilmungshilfsmittel (PVE) weist ein vergleichsweise gutes und abgerundetes Gesamtbild seiner anwendungstechnischen Eigenschaften auf, was nicht vorauszusehen war.

Ein ähnlich gutes Ergebnis wird erhalten, wenn man anstelle von PVE ein Hydroxyestergemisch, das durch Umsetzung von Propylenoxid mit 2-Ethylhexansäure hergestellt wurde, einsetzt.

## Patentanspruch

Verwendung von an sich bekannten Hydroxyestergemischen, die durch Umsetzung von Propylenoxid mit einer oder mehreren aliphatischen $C_7$- bis $C_{12}$-Monocarbonsäure(n) erhalten werden können, als Verfilmungshilfsmittel für filmbildende, wässerige Kunststoffdispersionen.

## Claim

The use of a hydroxyester mixture, which is known *per se* and can be obtained by reaction of propylene oxide with one or more aliphatic monocarboxylic acids of 7 to 12 carbon atoms, as a film-forming assistant for film-forming, aqueous plastics dispersions.

## Revendication

Utilisation de mélanges d'hydroxyesters connus en eux-mêmes que l'on peut obtenir par réaction de l'oxyde de propylène sur un ou plusieurs acides monocarboxyliques aliphatiques en $C_7$ à $C_{12}$, comme adjuvants de formation de feuil pour dispersions aqueuses filmogènes de matière synthétique.